# EUROPÄISCHE PATENTANMELDUNG

(11) **EP 3 742 281 A1**
(43) Veröffentlichungstag der Anmeldung: **25.11.2020**
(21) Anmeldenummer: 20174178.2
(22) Anmeldetag: 12.05.2020
(51) Int. Cl.: G06F 3/16

(54) **ASSISTENZSYSTEM UND VERFAHREN ZUR UNTERSTÜTZUNG EINES OPERATEURS**

(30) Priorität: 22.05.2019 DE 102019113680
(71) Anmelder: Deutsches Zentrum für Luft- und Raumfahrt e.V., 51147 Köln (DE)
(72) Erfinder: RATAJ, Jürgen, 38536 Meinersen (DE); OHNEISER, Oliver, 38533 Vordorf (DE)
(74) Vertreter: Gramm, Lins & Partner Patent- und Rechtsanwälte PartGmbB

(57) **Zusammenfassung**

Die Erfindung betrifft ein Assistenzsystem zur Unterstützung mindestens eines Operateurs bei situationsabhängigen Planungs- und/oder Führungsaufgaben einer zu assistierenden Situation, wobei das Assistenzsystem eingerichtet ist,
- aus einer in einem Datenspeicher hinterlegten Vielzahl von vorgegebenen akustischen Tonfolgen, die jeweils aus mehreren Einzeltönen bestehen, in Abhängigkeit von dem ermittelten aktuellen und/oder prognostizierten Zustand der zu assistierenden Situation eine gewisse Anzahl von Tonfolgen auszuwählen,
- diese Auswahl von Tonfolgen zu einer Klangfolge zusammenzusetzen, und
- diese zusammengesetzte Klangfolge über mindestens einen Lautsprecher an den mindestens einen Operateur zur Unterstützung der situationsabhängigen Planungs- und/oder Führungsaufgaben der zu assistierenden Situation auszugeben.

## Beschreibung

Die Erfindung betrifft ein Assistenzsystem zur Unterstützung mindestens eines Operateurs bei situationsabhängigen Planungs- und/oder Führungsaufgaben einer zu assistierenden Situation. Die Erfindung betrifft ebenso ein Verfahren zur Unterstützung mindestens eines Operateurs bei situationsabhängigen Planungs- und/oder Führungsaufgaben einer zu assistierenden Situation.

Durch den weiter steigenden Grad der Automation in fast allen Lebensbereichen kommen vermehrt immer mehr Assistenzsysteme zum Einsatz, die ganz oder nur in Teilbereichen die Planungs- und/oder Führungsaufgaben eines Operateurs unterstützen oder sogar vollständig die Kontrolle übernehmen sollen, um die mit der Planungs- und/oder Führungsaufgabe betraute Person zu entlasten und die Sicherheit zu erhöhen.

So befinden sich in modernen Kraftfahrzeugen eine Vielzahl von elektronischen Zusatzeinrichtungen, die den Fahrer bei seiner Planungs- und/oder Führungsaufgabe in bestimmten Fahrsituationen unterstützen sollen (bspw. ABS, ACC, etc). Bei solchen elektronischen Zusatzeinrichtungen in Kraftfahrzeugen, auch Fahrerassistenzsysteme genannt, werden durch das Kraftfahrzeug kontinuierlich entsprechende Zustandsdaten des Fahrzeuges und der Umgebung ermittelt, welche die zu assistierende Situation beschreibenden bzw. definieren. Solche Zustandsdaten sind in der Regel sensorische Messwerte, auf deren Basis dann der aktuelle und/oder prognostizierte Zustand der zu assistierenden Situation durch das Assistenzsystem berechnet werden kann. Unter Kenntnis des aktuellen und/oder prognostizierten Zustandes der zu assistierenden Situation kann dann das Assistenzsystem entsprechende Maßnahmen ergreifen, die von einer einfachen Ausgabe von Informationen bezüglich der Situation bis hin zu automatischen Eingriffen in die Planung und/oder Steuerung reichen können.

Solche Assistenzsysteme finden sich jedoch nicht nur im Bereich der Kraftfahrzeuge, sondern mittlerweile in fast allen Bereichen, in denen ein Operateur bei situationsabhängigen Planungs- und/oder Führungsaufgaben unterstützt werden muss. So finden sich im Bereich der Lotsen, beispielsweise bei Fluglotsen oder Hafenlotsen, elektronische Systeme, die den Lotsen als Operateur einen Überblick über die Gesamtsituation verschaffen und gegebenenfalls entsprechenden Handlungsoptionen für den Lotsen aus der Gesamtsituation ableiten, um den Lotsen bestmöglich zu unterstützen.

So wird bei Fluglotsen basierend auf den Radardaten, den von den Flugzeugen ausgesendeten Informationen und weiteren externen Zustandsdaten (bspw. Wetterdaten) die Gesamtsituation in einem bestimmten Flugbereich (beispielsweise im Anflugbereich eines Flughafens) kontinuierlich ermittelt und graphisch auf einem Display dem Lotsen angezeigt, um so den Fluglotsen ein möglichst umfassendes Situationsbewusstsein zu verschaffen. Außerdem können je nach verwendetem System auch Handlungsoptionen generiert und dem Lotsen angezeigt werden, um ihn bei seiner Planungs- und/oder Führungsaufgabe noch besser unterstützen zu können. Derartige Handlungsoptionen werden dabei basierend auf dem Zustand der Gesamtsituation, wie er sich aus den Zustandsdaten ergibt, von dem System automatisch generiert und dem Lotsen dann präsentiert.

Aus der DE 10 2011 107 934 A1 ist ein Assistenzsystem zur Unterstützung bei situationsabhängigen Planungs- und/oder Führungsaufgaben einer Regelstrecke bekannt, wobei auch hier gattungsgemäß zunächst mithilfe einer Zustandserfassungseinheit der Zustand der Regelstrecke sensorisch erfasst wird. Mithilfe einer akustischen Aufnahmeeinheit werden akustische Sprachsignale zwischen dem Lotsen und einem Piloten im Luftraum aufgenommen und analysiert, wobei basierend auf dem Inhalt der Sprachsignale zwischen Lotse und Pilot dann der Zustand der Regelstrecke angepasst wird.

Aufgrund der häufig sehr hohen Informationsdichte derartiger Assistenzsysteme fokussiert der Operateur, der das Assistenzsystem nutzt, seine Aufmerksamkeit auf die relevanten Ereignisse. Zur Unterstützung werden dabei diskrete Ereigniselemente zur Wahrnehmung durch verschiedene Sinne präsentiert, um die Aufmerksamkeit des Operateurs auf diejenigen Ereignisse und Informationen zu fokussieren, die aus Sicht des Assistenzsystems einer Handlung durch den Operateur bedürfen.

Meistens erfolgt dabei die Steuerung der Aufmerksamkeit unabhängig von der aktuellen Aufmerksamkeitsverteilung bzw. des Aufmerksamkeitsfokus eines Operateurs. Zudem ist die Aufmerksamkeitssteuerung durch die Systeme oft aufdringlich, um eine schnelle Änderung des Aufmerksamkeitsfokus zu erzielen. Dies ist jedoch nicht immer sinnvoll oder bei einer Störung der Abarbeitung von anderen Aufgaben sogar hinderlich.

Neben herkömmlichen Warntönen, wie sie bei Assistenzsystemen weit verbreitet sind, sind auch akustische Ausgaben in Form von Sprachinformationen bzw. Sprachnachrichten bekannt, um neben der reinen Steuerung des Aufmerksamkeitsfokus auch weitere Informationen bezüglich des Ereignisses, welches nun der Aufmerksamkeit des Operateurs bedarf, akustisch transportieren zu können.

Derartige akustische Ausgaben in Form von Warntönen oder Sprachnachrichten werden jedoch oftmals als aufdringlich und störend empfunden und führen daher selten zu dem Effekt, die Aufmerksamkeit des Operateurs ohne Druck auf das gewünschte Ereignis zu lenken. Während Warntöne oftmals zu eindimensional hinsichtlich der zu übermittelnden Information sind, sind Sprachnachrichten oft zu komplex und mit Informationen überfrachtet.

Es ist daher Aufgabe der vorliegenden Erfindung ein verbessertes Assistenzsystem und ein verbessertes Verfahren anzugeben, mit denen die Aufmerksamkeit gezielt und sicher auf ein Ereignis gelenkt werden kann, ohne dabei als störend oder aufdringlich empfunden zu werden.

Die Aufgabe wird mit dem Assistenzsystem gemäß Anspruch 1 sowie dem Verfahren gemäß Anspruch 6 erfindungsgemäß gelöst. Vorteilhafte Ausgestaltungen der Erfindung finden sich in den entsprechenden Unteransprüchen.

Gemäß Anspruch 1 wird ein Assistenzsystem zur Unterstützung mindestens eines Operateurs bei situationsabhängigen Planungs- und/oder Führungsaufgaben einer zu assistierenden Situation vorgeschlagen, wobei das Assistenzsystem mindestens eine Datenschnittstelle aufweist, die zum Erhalten von die zu assistierende Situation beschreibenden Zustandsdaten vorgesehen ist. Über diese Datenschnittstelle können dem Assistenzsystem ein Teil oder alle zur Verfügung stehenden Daten der zu assistierenden Situation bereitgestellt werden, aus denen sich dann ein möglichst umfassendes Situationsbewusstsein der zu assistierenden Situation herstellen lässt.

Unter einer zu assistierenden Situation wird dabei innerhalb eines Bereiches oder eines Gebietes die Durchführung von Planungs- und/oder Führungsaufgaben verstanden, wie beispielsweise das Steuern von Flugzeugen innerhalb eines Luftraumes durch einen oder mehrere Fluglotsen oder das Steuern von Schiffen innerhalb eines Hafenbereiches durch einen oder mehrere Hafenlotsen. Aber auch Fahrsituationen bei der Führung von Kraftfahrzeugen, Schienenfahrzeugen oder Luftfahrzeugen werden als zu assistierende Situationen im Sinne der vorliegenden Erfindung verstanden. Auch die Durchführung von Planungs- und/oder Führungsaufgaben bei industriellen Anlagen, wie beispielsweise Chemie- oder Nuklearreaktoren bzw. Anlagen, fällt hierunter. Allgemein gesagt immer dann, wenn ein Operateur eine Prozesssteuerung durchführen soll.

Das Assistenzsystem weist gattungsgemäß des Weiteren eine Auswerteeinheit auf, die zum Ermitteln eines aktuellen und/oder prognostizierten Zustandes der zu assistierenden Situation in Abhängigkeit von den durch die Datenschnittstelle bereitgestellten Zustandsdaten eingerichtet ist. Durch die Auswerteeinheit des Assistenzsystems wird somit ein maschinelles Situationsbewusstsein der zu assistierenden Situation basierend auf den durch die Datenschnittstelle bereitgestellten Zustandsdaten geschaffen, welches in erster Linie dazu dient, den Operateur, der das Assistenzsystem verwendet, bei seiner Planungs- und/oder Führungsaufgabe zu unterstützen.

Unter dem aktuellen Zustand der zu assistierenden Situation wird dabei verstanden, wie die zu assistierende Situation zum Zeitpunkt der Erfassung der die situationsbeschreibenden Zustandsdaten konkret vorliegt. Der aktuelle Zustand der zu assistierenden Situation bildet somit die konkrete Ausgestaltung zum betrachteten Zeitpunkt und kann als Grundlage zur Erfassung der Situation dienen. Unter einem prognostizierten Zustand der zu assistierenden Situation wird dabei ein in der Zukunft liegender Zustand der zu assistierenden Situation verstanden, der sich aus dem aktuellen Zustand und/oder in der Vergangenheit liegender Zustände ableiten lässt (beispielsweise durch Extrapolation bekannter Zustandsdaten). Derartige prognostizierte Zustände können beispielsweise Orts- und/oder Bewegungsinformationen von Verkehrsteilnehmern (beispielsweise Flugzeuge in einem zu überwachenden Luftraum) zu einem in der Zukunft liegenden Zeitpunkt sein, wobei diese in der Zukunft liegenden Orts- und/oder Bewegungsinformationen der Verkehrsteilnehmer durch Extrapolation (z.B. mittels physikalischer Modelle) der bekannten Orts- und/oder Bewegungsinformationen bestimmbar sind.

Hierfür weist das Assistenzsystem weiterhin mindestens eine Ausgabeeinheit auf, die zur visuellen, akustischen und/oder haptischen Ausgabe in Abhängigkeit von dem ermittelten aktuellen und/oder prognostizierten Zustand der zu assistierenden Situation ausgebildet ist. Eine solche Ausgabe kann beispielsweise ein Display (visuelle Ausgabe in Form von Monitoren oder Projektionen) sein, auf dem das durch die Auswerteeinheit erzeugte maschinelle Situationsbewusstsein graphisch dargestellt wird. Durch diese grafische Darstellung des aktuellen und/oder prognostizierten Zustandes der zu assistierenden Situation in Form eines maschinellen Situationsbewusstseins kann eine gezielte und möglichst umfassende Übermittlung der Zustandsinformationen der Situation mit einer hohen Informationsdichte an den Operateur übertragen werden, um so auch beim Operateur ein möglichst umfassendes Situationsbewusstsein zu schaffen. Dies inkludiert selbstverständlich auch die Ausgabe von Handlungsoptionen, die basierend auf dem ermittelten aktuellen und/oder prognostizierten Zustandes der zu assistierenden Situation generiert wurden.

Erfindungsgemäß ist nun vorgesehen, dass das Assistenzsystem eingerichtet ist, aus einer in einem Datenspeicher hinterlegten Vielzahl von vorgegebenen akustischen Tonfolgen, die jeweils aus mehreren Einzeltönen bestehen, in Abhängigkeit von dem ermittelten aktuellen und/oder prognostizierten Zustand der zu assistierenden Situation eine gewisse Anzahl von Tonfolgen auszuwählen, dieser Auswahl von Tonfolgen zu einer Klangfolge zusammenzusetzen, und diese zusammengesetzte Klangfolge über mindestens einen Lautsprecher an den mindestens einen Operateur zur Unterstützung der zu assistierenden Situation auszugeben.

Durch den dynamischen Aufbau und die Variation der Klangfolge kann durch das Assistenzsystem die Aufmerksamkeit auf ein Ereignis gerichtet werden und gleichzeitig durch die einzelnen Tonfolgen der Klangfolge eine Nachricht bzw. Information bezüglich des Ereignisses, auf das die Aufmerksamkeit gelenkt werden soll, in das akustische Signal kodiert werden. Es hat sich gezeigt, dass eine derartige akustische Präsentation zur Aufmerksamkeitssteuerung weder aufdringlich noch störend empfunden wird, wobei der Operateur trotz hoher Arbeitsbelastung die in den Tonfolgen kodierte Information wahrnimmt. Der Operateur kann so seine Aufmerksamkeit entsprechend priorisieren, ohne seinen derzeitigen Fokus verlassen zu müssen.

Eine solche Tonfolge besteht dabei aus mehreren Einzeltönen, die in der zusammengesetzten Tonfolge ein harmonisches Klangbild ergeben. Durch das zusammensetzen mehrerer Tonfolgen zu einer gemeinsamen Klangfolge, kann so ein harmonisches, melodenhaftes akustisches Signal generiert werden, welches als angenehm empfunden wird.

Dabei wird durch jede einzelne Tonfolge ein bestimmter Inhalt kodiert, der im Kontext des Zustandes der zu assistierenden Situation als eine entsprechende Information bzw. Nachricht bezogen auf den Zustand der Situation interpretiert werden kann. Bezogen auf den Zustand der Situation werden diejenigen Tonfolgen ausgewählt, die den entsprechenden Inhalt kodieren, sodass anhand der aus den ausgewählten Tonfolgen zusammengesetzten Klangfolge und deren akustischen Wahrnehmung der durch die Tonfolgen kodierte Inhalt als Information bezogen auf den Zustand der Situation wahrnehmbar und interpretierbar ist.

Gemäß einer Ausführungsform ist vorgesehen, dass die akustischen Tonfolgen aus musikalischen Grundtönen bestehen und/oder die zusammengesetzte Klangfolge eine Melodie ist.

Gemäß einer Ausführungsform ist vorgesehen, dass jede in dem Datenspeicher hinterlegte Tonfolge mindestens einem Zustand und/oder einem Bereich von Zuständen zugeordnet ist, wobei das Assistenzsystem eingerichtet ist, diejenigen Tonfolgen auszuwählen, die jeweils dem zugeordneten Zustand und/oder dem Bereich von Zuständen entsprechen. So können bestimmte Zustände der zu assistierenden Situation, wie beispielsweise Gefahrenlagen und deren Klassifikation, jeweils einer oder mehreren Tonfolgen zugeordnet sein, sodass allein durch die akustische Wahrnehmung der Klangfolge nicht nur die Aufmerksamkeit auf den entsprechenden Zustand gelenkt werden kann, sondern auch zumindest teilweise der Zustand der Situation übermittelt werden kann.

Gemäß einer Ausführungsform ist vorgesehen, dass die Auswerteeinheit zum Ermitteln mindestens einer Handlungsoption für den Operateur in Abhängigkeit von dem ermittelten aktuellen und/oder prognostizierten Zustand eingerichtet ist, wobei das Assistenzsystem eingerichtet ist, die Tonfolgen in Abhängigkeit von der mindestens einen ermittelten Handlungsoption auszuwählen. Handlungsoptionen dienen dazu, dem Operateur mögliche Handlungen aufzuzeigen, mit denen basierend auf dem aktuellen und/der zu assistierenden Situation oder prognostizierten Zustand der Situation beispielsweise auf ein Ereignis reagieren kann. Das Assistenzsystem ist dabei so ausgebildet, dass es unter Kenntnis des aktuellen und/oder prognostizierten Zustandes mögliche sinnvolle Handlungsoptionen ermitteln kann, um so den Operateur bei seiner Planungs- und/oder Führungsaufgabe weiter zu unterstützen.

Gemäß einer weiteren Ausführungsform ist vorgesehen, dass ein oder mehrere in dem Datenspeicher hinterlegte Tonfolge mindestens einer Handlungsoption und/oder einem Bereich von Handlungsoptionen zugeordnet ist, wobei das Assistenzsystem eingerichtet ist, diejenigen Tonfolgen auszuwählen, die jeweils der zugeordneten Handlungsoption und/oder dem Bereich von Handlungsoptionen entsprechen.

Gemäß einer Ausführungsform ist vorgesehen, dass die zusammengesetzte Klangfolge hinsichtlich mindestens eines Klangparameters in Abhängigkeit von dem ermittelten aktuellen und/oder prognostizierten Zustand der zu assistierenden Situation variiert oder verändert wird, um weitere, die gesamte Situation betreffende informierende Elemente hinzufügen und transportieren zu können. So kann bspw. die Tonlage und/oder die Abspielgeschwindigkeit der Klangfolge verändert werden, um weitere Informationen (wie z.B. eine Dringlichkeit oder eine Gefahrenstufe) signalisieren zu können.

Die Aufgabe wird im Übrigen auch mit dem Verfahren gemäß Anspruch 7 zur Unterstützung mindestens eines Operateurs bei situationsabhängigen Planungs- und/oder Führungsaufgaben einer zu assistierenden Situation mittels eines Assistenzsystems gelöst, wobei das Verfahren die folgenden Schritte umfasst:
- Erhalten von die zu assistierende Situation beschreibenden Zustandsdaten mittels einer Datenschnittstelle des Assistenzsystems,
- Ermitteln eines aktuellen und/oder prognostizierten Zustandes der zu assistierenden Situation in Abhängigkeit von den durch die Datenschnittstelle erhaltenen Zustandsdaten mittels einer Auswerteeinheit des Assistenzsystems,
- Auswählen einer gewisse Anzahl von Tonfolgen aus einer in einem Datenspeicher hinterlegten Vielzahl von vorgegebenen akustischen Tonfolgen, die jeweils aus mehreren Einzeltönen bestehen, in Abhängigkeit von dem ermittelten aktuellen und/oder prognostizierten Zustand der zu assistierenden Situation,
- Zusammensetzen dieser Auswahl von Tonfolgen zu einer Klangfolge, und
- Ausgeben dieser zusammengesetzten Klangfolge über mindestens einen Lautsprecher an den mindestens einen Operateur zur Unterstützung der situationsabhängigen Planungs- und/oder Führungsaufgaben der zu assistierenden Situation.

Vorteilhafte Ausgestaltungen des erfindungsgemäßen Verfahrens finden sich in den entsprechenden Unteransprüchen.

Die Erfindung wird anhand der beigefügten Figur beispielhaft näher erläutert. Es zeigen:

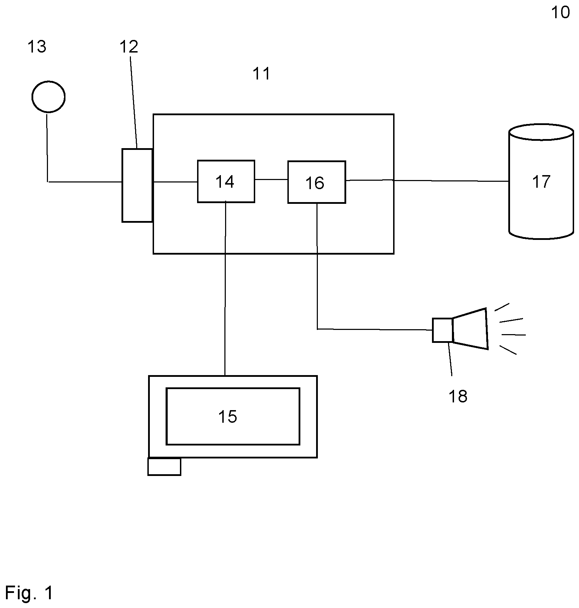

- Figur 1: schematische Darstellung des erfindungsgemäßen Assistenzsystems.

Figur 1 zeigt schematisch den Aufbau des Assistenzsystems 10, das eine Auswerteeinheit 11 hat. Über eine Datenschnittstelle 12 werden der Auswerteeinheit 11 des Assistenzsystems 10 jene Zustandsdaten bereitgestellt, welche die zu assistierende Situation beschreibenden. Das Erfassen der Zustandsdaten kann dabei mithilfe einer Sensorik 13 erfolgen, die entsprechende Parameter mithilfe von entsprechenden Sensoren erfassen kann. Im Ausführungsbeispiel der Figur 1 ist die Sensorik 13 dabei nur angedeutet. Entscheidend ist, dass über die Datenschnittstelle 12 insoweit jene Zustandsdaten der Auswerteeinheit 11 bereitgestellt werden, die notwendig sind, um einen aktuellen und/oder prognostizierten Zustand der zu assistierenden Situation maschinell und automatisch ermitteln zu können.

Die Auswerteeinheit 11 weist ein Zustandsmodul 14 auf, welches die von der Datenschnittstelle 12 erhaltenen Zustandsdaten erhält und basierend darauf einen aktuellen und/oder prognostizierten Zustand der zu assistierenden Situation ermittelt.

Die Auswerteeinheit 11 des Assistenzsystems 10 ist des Weiteren mit einem Display 15 verbunden, das beispielsweise ein Monitor oder eine Mehrzahl von Monitoren sein kann. Die Auswerteeinheit 11 ist nun so ausgebildet, dass sie visuell und gegebenenfalls auch akustisch den von dem Zustandsmodul 14 ermittelten aktuellen und/oder prognostizierten Zustand der zu assistierenden Situation auf dem Display 15 ausgeben kann, sodass der Operateur, dem die Planungs- und/oder Führungsaufgabe der zu assistierenden Situation obliegt, den Zustand der Situation erfassen kann. Hierdurch wird es möglich, ein entsprechendes Situationsbewusstsein bei dem Operateur bezüglich der zu assistierenden Situation zu schaffen.

Die Auswerteeinheit 11 weist des Weiteren ein Klangmodul 16 auf, das mit einem Datenspeicher 17 kommunikativ in Verbindung steht. In dem Datenspeicher 17 sind eine Vielzahl von akustischen Tonfolgen hinterlegt, die aus mehreren Einzeltönen bestehen, wobei jeder akustischen Tonfolge ein Nachrichtenkontext und/oder ein Handlungskontext zugeordnet ist. Basierend auf dem aktuellen Zustand und/oder dem prognostizierten Zustand der zu assistierenden Situation werden nun die entsprechenden Tonfolgen aus dem Datenspeicher ermittelt, und zwar derart, dass diejenigen Tonfolgen ausgewählt werden, deren Nachrichtenkontext und/oder Handlungskontext dem Zustand der Situation entsprechen. So kann jede Tonfolge in Bezug auf die vorliegende Situation und deren Zustand entsprechend interpretiert werden, sodass sich daraus letztlich eine Nachrichtenübermittlung bzw. Informationsübermittlung ergibt.

Das Klangmodul 16 ermittelt nun die relevanten Tonfolgen aus dem Datenspeicher 17 und setzt diese zu einer zusammenhängenden Klangfolge zusammen. Diese so zusammengesetzte Klangfolge, die aus mehreren Tonfolgen besteht, wird nun an einen Lautsprecher 18 übertragen, um die so generierte Klangfolge akustisch wiederzugeben. Das Klangmodul 16 ist weiterhin in der Lage die gesamte erzeugte Klangfolge z.B. in Tonlage oder Abspielgeschwindigkeit zu variieren um weitere, die gesamte Information betreffende, informierende Elemente hinzuzufügen.

Die Erfindung unterscheidet sich vom Stand der Technik durch den dynamischen Aufbau und Variation der Klangfolge, die Auskunft über eine bestimmte möglicherweise dringliche Situation und Vorschläge zur Handlungen in dieser Situation gibt. Die zur Informationsübermittlung verwendete Klangfolge setzt sich dabei aus einzelnen vordefinierten Tonfolgen zusammen, die jeweils Auskunft über aktuelle situative Elemente und mögliche Handlungen geben. Hier enthaltenen vordefinierten Tonfolgen den Kern der zu übermittelnden Information in Bezug auf die Situation. Die Variation einer Grund Klangfolge beschreibt mögliche Abweichungen davon oder Ergänzungen dazu. Die Klangfolge kodiert somit eine bestimmte Situation und gegebenenfalls eine dazu passende Handlung bestehend aus unterschiedlichen Teilelementen.

In komplexen Umgebungen ergibt sich daraus eine Klangsprache, welche sich auf einer Ontologie zur Beschreibung möglicher Situationen und Handlungen abstützt. Die Klangsprache ist so gestaltet, dass sie vom Hörer als nicht-intrusiv und angenehm empfunden wird. Hierzu können musikalische Grundelemente kombiniert und variiert werden. Mit dieser Klangsprache wird es somit möglich, bei visueller Abwesenheit eines Operateurs verschiedene Situationen zu beschreiben und auf mögliche Handlungen aufmerksam zu machen. Dies ermöglicht dem Operateur schnell und gezielt nach den aufgezeigten Situationen zu suchen, die möglicherweise vorgeschlagenen Handlungsoptionen zu prüfen und schnell zu implementieren. Dringlichkeit, Wichtigkeit und Ort der Situation können durch Amplituden (Lautstärke), Frequenz, Phase und/oder akustische Verortung kodiert werden.

Das in Figur 1 gezeigte Assistenzsystem 10 kann dabei beispielsweise an einem Lotsenarbeitsplatz implementiert sein, welches die aktuelle Verkehrssituation und mögliche Prädiktionen in eine Klangfolge (Melodien) umwandelt. Hierzu verfügt das System über vordefinierte variierbare Tonfolgen, welchen Grundelemente einer Ontologie zur Situations- und/oder Handlungsdarstellung verkörpern. Eine Kombination und Variation dieser Elemente ist in der Lage, sowohl die aktuelle Situation als auch Handlungsoptionen zu beschreiben. Abhängig vom Aufmerksamkeitsfokus des Lotsen und der aktuellen Situation wird die Klangfolge erzeugt, die die Information einer Situation klanglich beschreibt. Außerdem kann der Lotse aufgrund der Klangfolge mögliche Handlungsoptionen identifizieren.

Z.B. scannt der Fluglotsen gerade Höhe und Geschwindigkeit eines Luftfahrzeuges in einer Ecke des Verkehrslagedisplays. Eine sich anbahnende, notwendige und vom Fluglotsen zu instruierende Aktion auf der anderen Seite des Displays beachtet der Lotse indes nicht. Um die Aufmerksamkeit des Lotsen sanft in Richtung dieser Aktion und der entsprechenden Displayposition zu lenken, werden Tonfolgen von beteiligten Verkehrsakteuren (z.B. Luftfahrzeuge), von relevanten Bewegungsdaten (z.B. Höhe, Geschwindigkeit, Richtung), von der Art der notwendigen Aktion (z.B. Konflikt, Verantwortlichkeitsübergabe, Änderung des Fortbewegungsvektor, Wetterdaten, etc.), von möglichen Lösungsvorschlägen (z.B. anderen Verantwortlichen lotsen kontaktieren, eines der Beteiligten Luftfahrzeuge in seinem kurz/Höhe/Geschwindigkeit ändern, etc.), sowie von Informationen zur Dringlichkeit, Wichtigkeit und zum Ort (z.B. über Lautstärke, Frequenz, Phase und die Verortung im Raum mittels eines 3D-Klanges) aus dem Datenspeicher 17 ermittelt und zu einer Klangfolge zusammengesetzt und dann über den Lautsprecher 18 abgespielt.

### Bezugszeichenliste

- 10: Assistenzsystem
- 11: Auswerteeinheit
- 12: Datenschnittstelle
- 13: Sensorik
- 14: Zustandsmodul
- 15: Display
- 16: Klangmodul
- 17: Datenspeicher
- 18: Lautsprecher

## Patentansprüche

1. Assistenzsystem (10) zur Unterstützung mindestens eines Operateurs bei situationsabhängigen Planungs- und/oder Führungsaufgaben einer zu assistierenden Situation, wobei das Assistenzsystem (10) aufweist:
- mindestens eine Datenschnittstelle (12), die zum Erhalten von die zu assistierende Situation beschreibenden Zustandsdaten ausgebildet ist,
- eine Auswerteeinheit (11), die zum Ermitteln eines aktuellen und/oder prognostizierten Zustandes der zu assistierenden Situation in Abhängigkeit von den durch die Datenschnittstelle (12) erhaltenen Zustandsdaten eingerichtet ist, und
- mindestens eine Ausgabeeinheit, die zur visuellen, akustischen und/oder haptischen Ausgabe in Abhängigkeit von dem ermittelten aktuellen und/oder prognostizierten Zustand der zu assistierenden Situation ausgebildet ist,
**dadurch gekennzeichnet, dass** das Assistenzsystem (10) eingerichtet ist,
- aus einer in einem Datenspeicher (17) hinterlegten Vielzahl von vorgegebenen akustischen Tonfolgen, die jeweils aus mehreren Einzeltönen bestehen, in Abhängigkeit von dem ermittelten aktuellen und/oder prognostizierten Zustand der zu assistierenden Situation eine gewisse Anzahl von Tonfolgen auszuwählen,
- diese Auswahl von Tonfolgen zu einer Klangfolge zusammenzusetzen, und
- diese zusammengesetzte Klangfolge über mindestens einen Lautsprecher (18) an den mindestens einen Operateur zur Unterstützung der situationsabhängigen Planungs- und/oder Führungsaufgaben der zu assistierenden Situation auszugeben.

2. Assistenzsystem (10) nach Anspruch 1, **dadurch gekennzeichnet, dass** die akustischen Tonfolgen aus musikalischen Grundtönen bestehen und/oder die zusammengesetzte Klangfolge eine Melodie ist.

3. Assistenzsystem (10) nach Anspruch 1 oder 2, **dadurch gekennzeichnet, dass** eine oder mehrere in dem Datenspeicher (17) hinterlegte Tonfolgen mindestens einem Zustand und/oder einem Bereich von Zuständen zugeordnet ist, wobei das Assistenzsystem (10) eingerichtet ist, diejenigen Tonfolgen auszuwählen, die jeweils dem zugeordneten Zustand und/oder dem Bereich von Zuständen entsprechen.

4. Assistenzsystem (10) nach einem der vorhergehenden Ansprüche, **dadurch gekennzeichnet, dass** die Auswerteeinheit (11) zum Ermitteln mindestens einer Handlungsoption für den Operateur in Abhängigkeit von dem ermittelten aktuellen und/oder prognostizierten Zustand eingerichtet ist, wobei das Assistenzsystem (10) eingerichtet ist, die Tonfolgen in Abhängigkeit von der mindestens einen ermittelten Handlungsoption auszuwählen.

5. Assistenzsystem (10) nach Anspruch 4, **dadurch gekennzeichnet, dass** eine oder mehrere in dem Datenspeicher (17) hinterlegte Tonfolgen mindestens einer Handlungsoption und/oder einem Bereich von Handlungsoptionen zugeordnet ist, wobei das Assistenzsystem (10) eingerichtet ist, diejenigen Tonfolgen auszuwählen, die jeweils der zugeordneten Handlungsoption und/oder dem Bereich von Handlungsoptionen entsprechen.

6. Assistenzsystem (10) nach einem der vorhergehenden Ansprüche, **dadurch gekennzeichnet, dass** das Assistenzsystem (10) eingerichtet ist, die zusammengesetzte Klangfolge hinsichtlich mindestens eines Klangparameters in Abhängigkeit von dem ermittelten aktuellen und/oder prognostizierten Zustand der zu assistierenden Situation zu variieren oder zu verändern.

7. Verfahren zur Unterstützung mindestens eines Operateurs bei situationsabhängigen Planungs- und/oder Führungsaufgaben einer zu assistierenden Situation mittels eines Assistenzsystems (10), wobei das Verfahren die folgenden Schritte umfasst:
- Erhalten von die zu assistierende Situation beschreibenden Zustandsdaten mittels einer Datenschnittstelle (12) des Assistenzsystems (10),
- Ermitteln eines aktuellen und/oder prognostizierten Zustandes der zu assistierenden Situation in Abhängigkeit von den durch die Datenschnittstelle (12) erhaltenen Zustandsdaten mittels einer Auswerteeinheit (11) des Assistenzsystems (10),
- visuelle, akustische und/oder haptische Ausgabe in Abhängigkeit von dem ermittelten aktuellen und/oder prognostizierten Zustandes der zu assistierenden Situation mittels einer Ausgabeeinheit des Assistenzsystems (10),
**gekennzeichnet durch**
- Auswählen einer gewisse Anzahl von Tonfolgen aus einer in einem Datenspeicher (17) hinterlegten Vielzahl von vorgegebenen akustischen Tonfolgen, die jeweils aus mehreren Einzeltönen bestehen, in Abhängigkeit von dem ermittelten aktuellen und/oder prognostizierten Zustand der zu assistierenden Situation,
- Zusammensetzen dieser Auswahl von Tonfolgen zu einer Klangfolge, und
- Ausgeben dieser zusammengesetzten Klangfolge über mindestens einen Lautsprecher (18) an den mindestens einen Operateur zur Unterstützung der situationsabhängigen Planungs- und/oder Führungsaufgaben der zu assistierenden Situation.

8. Verfahren nach Anspruch 7, **dadurch gekennzeichnet, dass** die akustischen Tonfolgen aus musikalischen Grundtönen bestehen und/oder die zusammengesetzte Klangfolge eine Melodie ist.

9. Verfahren nach Anspruch 7 oder 8, **dadurch gekennzeichnet, dass** jede in dem Datenspeicher (17) hinterlegte Tonfolge mindestens einem Zustand und/oder einem Bereich von Zuständen zugeordnet ist, wobei diejenigen Tonfolgen ausgewählt werden, die jeweils dem zugeordneten Zustand und/oder dem Bereich von Zuständen entsprechen.

10. Verfahren nach einem der Ansprüche 7 bis 9, **dadurch gekennzeichnet, dass** mindestens eine Handlungsoption für den Operateur in Abhängigkeit von dem ermittelten aktuellen und/oder prognostizierten Zustand mittels der Auswerteeinheit (11) ermittelt wird, wobei die Tonfolgen in Abhängigkeit von der mindestens einen ermittelten Handlungsoption ausgewählt wird.

11. Verfahren nach Anspruch 10, **dadurch gekennzeichnet, dass** jede in dem Datenspeicher (17) hinterlegte Tonfolge mindestens einer Handlungsoption und/oder einem Bereich von Handlungsoptionen zugeordnet ist, wobei diejenigen Tonfolgen ausgewählt werden, die jeweils der zugeordneten Handlungsoption und/oder dem Bereich von Handlungsoptionen entsprechen.

12. Verfahren nach einem der Ansprüche 7 bis 11, **dadurch gekennzeichnet, dass** die zusammengesetzte Klangfolge hinsichtlich mindestens eines Klangparameters in Abhängigkeit von dem ermittelten aktuellen und/oder prognostizierten Zustand der zu assistierenden Situation variiert oder verändert wird.
